# EUROPEAN PATENT APPLICATION

(11) **EP 4 592 266 A1**
(43) Date of publication of application: **30.07.2025**
(21) Application number: 23864091.6
(22) Date of filing: 15.09.2023
(51) Int. Cl.: C04B 28/36, C04B 24/16, C04B 22/12, C04B 103/40

(54) **MODIFIED BIOSULFUR COMPOSITION USING CALCIUM IONS AND FLUORINE IONS AND METHOD FOR PREPARING SAME**

(30) Priority: 22.09.2022 KR 20220120026; 15.12.2022 KR 20220175535
(71) Applicant: Eco Bio Holdings Co.,Ltd, Seoul, 07789 (KR)
(72) Inventor: SONG, Hyo Soon, Seoul (KR); KHIM, Young Min, Seoul (KR); HAN, Lae Bong, Seoul (KR); SONG, Myong Shin, Seoul (KR); LEE, Woong Geof, Seoul (KR)
(74) Representative: dompatent von Kreisler Selting Werner - Partnerschaft von Patent- und Rechtsanwälten mbB
(86) International application number: PCT/KR2023/013961
(87) International publication number: WO 2024/063459

(57) **Abstract**

The present invention relates to a modified bio-sulfur composition that has excellent storage stability and can be used at room temperature. More specifically, the present invention provides a modified bio-sulfur composition using calcium ions and fluorine ions, which exhibits mechanical properties equivalent to or better than conventionally known modified bio-sulfur binders, and at the same time has excellent storage and storage properties at room temperature, ensuring safety when used on concrete at room temperature, and a method for preparing the same.

## Description

### [Technical Field]

The present invention relates to a modified bio-sulfur composition, a mixture for concrete that has excellent storage stability and can be used at room temperature. More specifically, the present invention relates to a modified bio-sulfur composition using calcium ions and fluorine ions, which exhibits mechanical properties equivalent to or better than conventionally known modified bio-sulfur binders, and at the same time has excellent storage and storage properties at room temperature, ensuring safety when used on concrete at room temperature, and a method for preparing the same.

### [Background Art]

Sulfur is a component that melts at a temperature of 119°C or more and exists as a solid at room temperature. Since sulfur has oxidizing properties, it is being continuously developed as materials in civil engineering and construction fields such as road paving materials and construction materials.

The sulfur component is used as a binder by mixing with various aggregates, and is used in the manufacture of civil engineering materials and architectural materials in the form of molded products. However, when pure sulfur is used as a binder, since many problems occur in molded products due to brittleness, its application field is limited.

Therefore, in order to solve the above problems, methods of using a specific compound as a pure sulfur modifier are being studied. For example, dicyclopentadiene, etc., is used as a modifier as described above, and the dicyclopentadiene is not only economical due to its low price, but also known to have a good effect on the development of mechanical strength (New Uses of Sulfur-II, pp. 68~77 (1978)).

In this regard, U.S. Patent No. 4,025,352 discloses a preparation process for sulfur-modified concrete by reacting and mixing molten sulfur, dicyclopentadiene, and aggregates. In the case of the above patent, it is disclosed that by mixing sulfur, dicyclopentadiene, and aggregates at a specific temperature and time, the advantage of excellent solvent, salt, acid and alkali resistance can be achieved.

In addition, in this field, a method for preparing a modified sulfur binder in solid-phase form by reacting sulfur and dicyclopentadiene, and then later mixing it with aggregates to produce concrete, etc. is also proposed.

In addition, Japanese Laid-open Patent Publication Nos. 1990-25929 and 1990-28529 describe a method of improving the properties of sulfur by adding vinyl toluene, dipentene, and other olefin oligomers to use it as a paving material, adhesive, waterproof agent, etc.

Meanwhile, since sulfur has a flash point of 207°C and a spontaneous ignition temperature of 245°C and thus is flammable, sulfur exposed to the surface has the disadvantage of being easy to burn. In addition, with regard to mechanical strength, if there are no defects, sulfur exhibits high strength in a stable solid state, but when it is cooled and solidified from the actual liquid state, sulfur exists as a mixture of three types of sulfur: orthorhombic, monoclinic, and amorphous sulfur. In addition, since the mixing ratio of the mixture changes depending on the cooling conditions, sulfur has the problem that defects are likely to occur over time when stored and that it is prone to breaking due to brittleness.

Therefore, in order to overcome these problems, in the prior art, sulfur concrete or sulfur asphalt, etc. are prepared by melting and mixing sulfur with dicyclopentadiene and oligomer as a modifier at 120-160°C to modify sulfur, cooling the modified sulfur binder below 120°C to produce a solid state, and then remelting the modified sulfur binder in a special mixer where the temperature is maintained at about 120 to 160 °C and then mixing preheated aggregates and other additives at once as soon as possible and then flowing them into a preheated mold or forming mold to cool and solidify it. Alternatively, sulfur concrete or bio-sulfur asphalt are prepared by melting and mixing sulfur, modifier, and aggregates all at once under specific process conditions and then cooling them.

However, there is a problem that since the polymerization reaction of the above-mentioned modified-sulfur binder continues even within the temperature range of 120 to 160°C for remelting, the viscosity increases when used and ultimately the workability is not smooth.

Additionally, if the melting-mixing time in the mixer is too short, the modified-sulfur binder and aggregates are not sufficiently mixed, causing problems such that the obtained material is not continuous and has gaps or an uneven surface. Furthermore, when the temperature of the melt mixture is lowered, the fluidity is decreased and the workability is decreased, and ultimately, it is rapidly cooled and solidified. Therefore, there is a difficulty in that the melting-mixing time must be carried out as short a time as possible within the range allowed by the physical properties of the sulfur concrete product, in order to prevent these problems.

All conventional modified sulfur binders, or all materials for civil engineering, architecture, and construction, which contain them, can be prepared at a relatively low cost compared to cement, while exhibiting excellent physical properties such as mechanical strength, chemical resistance, and extrarapid hardening properties.

However, despite these excellent properties, it must be melted at 110°C or higher for use in the ground, sea, and underwater, thereby making it difficult to use as generalpurpose materials for construction.

In addition, in order to mix and use the modified sulfur binder with aggregates, cement, etc., a melter is required to melt the modified sulfur, and separate equipments such as an insulated transfer line and transfer pump for transferring the molten modified-sulfur binder into a storage container and mixing mixer are required, thereby resulting in high maintenance costs related to equipment management or transport costs.

Therefore, there is a need for the development of a modified sulfur composition that can be used by directly mixing with water, hydraulic materials, aggregates, etc. at actual construction sites or ready-mix concrete preparing plants.

### [Prior Art Document]

### [Patent Document]

(Patent Document 1) Korean Patent No. 10-2059395
(Patent Document 2) Korean Patent No. 10-0632609
(Patent Document 3) Korean Patent No. 10-1289324

### [Disclosure]

### [Technical Problem]

The present invention was devised to solve the above problems of the prior art, and it is an object of the present invention to provide a modified bio sulfur composition using calcium ions and fluorine ions, which can exist in a stable state at room temperature, and a preparing method thereof.

### [Technical Solution]

In order to achieve the above object, the present invention provides a modified bio-sulfur composition using calcium ion and fluorine ion, which is characterized by comprising,
a bio-sulfur;
a calcium ion source containing 20 to 50 parts by weight of a calcium element based on 100 parts by weight of the bio-sulfur;
a fluorine ion source containing 20 to 50 parts by weight of a fluorine element based on 100 parts by weight of the bio-sulfur;
0.5 to 3 parts by weight of an anionic surfactant based on 100 parts by weight of the bio-sulfur.

In addition, the present invention provides a method for preparing a modified bio-sulfur composition using calcium ions and fluorine ions, which is characterized by comprising the steps of:
1) dissolving bio-sulfur at 100 to 120°C;
2) adding and mixing 0.5 to 3 parts by weight of an anionic surfactant relative to 100 parts by weight of the bio-sulfur;
3) adding and mixing calcium ion source containing 20 to 50 parts by weight of calcium element based on 100 parts by weight of the bio-sulfur and a fluorine ion source containing 20 to 50 parts by weight of fluorine element based on 100 parts by weight of the bio-sulfur, while maintaining the mixture in step 2) above at a temperature of 100 to 120°C; and
4) heating and mixing the mixture of step 3) above while stirring it.

### [Advantageous Effects]

Since the modified bio-sulfur composition using calcium ions and fluorine ions of the present invention can be used in a liquid-phase slurry state at room temperature, it provides the effect of being able to be used at room temperature compared to the modified sulfur binder that melts at 110°C using existing dicyclopentadiene (DCPD).

As it can be used at room temperature, it is easy to store, provides economic effects such as ensuring safety and reducing energy when used, and provides an easy-to-use effect for concrete products at construction sites.

In addition, it provides higher miscibility and improved dispersibility during water curing reaction, thereby providing the effect of improving the properties of cement mortar or concrete products using it.

In addition, it provides the effect of further improving the durability of the concrete by creating a fluorosilicate compound due to the fluorine ions contained in the composition.

### [Description of Drawings]

FIG. 1 is a diagram schematically showing the characteristics of a modified bio-sulfur composition using calcium ions and fluorine ions, in which the surface of the sulfur mixture is stabilized by coating with magnesium fluorosilicate.
FIG. 2 shows the results obtained by testing the storage performance at room temperature of a modified bio-sulfur composition using calcium ions and fluorine ions.

### [Best Mode]

Hereinafter, the present invention will be described in detail.

Unless otherwise defined, the technical and scientific terms used in the present invention have meanings commonly understood by those skilled in the art in the technical field to which this invention pertain, and descriptions of known functions and configurations that may unnecessarily obscure the gist of the invention are omitted in the following description.

The bio-sulfur composition of the present invention is characterized by comprising:
a bio-sulfur;
a calcium ion source containing 20 to 50 parts by weight of a calcium element based on 100 parts by weight of the bio-sulfur;
a fluorine ion source containing 20 to 50 parts by weight of a fluorine element based on 100 parts by weight of the bio-sulfur; and
0.5 to 3 parts by weight of an anionic surfactant based on 100 parts by weight of the bio-sulfur.

It may be desirable to use the bio-sulfur containing 40% by weight or more of sulfur.

The calcium ion source is not particularly limited as long as it can supply calcium ions, and for example, may be calcium, calcium compound, or a material containing a calcium compound. The calcium compound may be calcium fluoride(CaF₂), calcium chloride, calcium iodide, calcium bromide or the like, and the material containing the calcium compound may be slaked lime, quicklime, fluorspar or the like.

In the present invention, 20 to 50 parts by weight of the calcium element is used relative to 100 parts by weight of the bio-sulfur. If the calcium element is used in an amount of less than 20 parts by weight, the reactivity between the bio-sulfur and calcium is weak and the bio-sulfur cannot be completely dissolved. If the calcium element is used in amounts exceeding 50 parts by weight, it is economically undesirable. Preferably, it is used in an amount of 25 to 40 parts by weight.

The fluorine ion source is not particularly limited as long as it can supply fluorine ions, and for example, may be fluorine, a fluorine compound, a material containing a fluorine compound or the like. The fluorine compound may be calcium fluoride (CaF₂), enoltosylate (RF=CHF₂), calcium fluorosilicate, magnesium fluorosilicate, zinc fluorosilicate or the like, the material containing the fluorine compound may be fluorspar or the like.

In the present invention, 20 to 50 parts by weight of the fluorine element is used relative to 100 parts by weight of the bio-sulfur. If the fluorine element is used in an amount of less than 20 parts by weight, the effect of improving durability is reduced when mixed with concrete. If the fluorine element is used in amounts exceeding 50 parts by weight, it may delay the setting of concrete. Preferably, it is used in an amount of 25 to 35 parts by weight.

In the present invention, the calcium ion source and fluorine ion source may be comprised as the same source. For example, it is possible to use calcium fluoride (CaF₂), calcium fluorosilicate, fluorspar or the like as these sources.

The bio-sulfur composition of the present invention has the feature of modifying water-insoluble bio-sulfur to make it water-soluble, and thus allowing it to be used as an additive to cement concrete used at room temperature. The bio-sulfur composition performs the function of improving durability, such as improving the compressive strength of the concrete, improving resistibility to neutralization, and improving salt resistance.

In general, the reaction between bio-sulfur and calcium ion is as follows.

3Ca(OH)₂ + 12S → 2CaS₅ + CaS₂O₃ + 3H₂O

The compound composed of the above CaS₅, CaS₂O₃ and water is called a sulfur mixture, and it has been widely used to control diseases and insect pests of various fruit trees, especially, crinkle leaf, dieback, scab, powdery mildew, monilia, fire blight, scale insects and mites since it was used in France in 1881 to control diseases and insect pests of grapes. In addition, the sulfur mixture is inexpensive.

Calcium polysulfide (CaS₅), the main component of the sulfur mixture, is activated when it comes into contact with oxygen and carbon dioxide in the air, thereby creating an active sulfur mixture, which is an unstable chemical substance.

In order to use the above sulfur mixture to improve the physical properties of cement concrete at room temperature, it is necessary to stabilize the sulfur mixture.

In order to stabilize the sulfur mixture, the role of fluorine ion is important. In other words, the fluorine ions are mixed into cement concrete and react with the silicon oxide component liberated from the cement, thereby producing fluorosilicate and poorly soluble metal fluoride. This production process proceeds as a thermodynamic endothermic reaction that offsets the hydration heat of cement and further stabilizes the poorly soluble metal fluoride. In addition, the fluorosilicate compound stabilizes the unstable sulfur mixture.

The above-described contents are expressed in chemical formula as follows.

SiO₂(aq) + 4H+ + 6F- = SiF₆-(aq) + 2H₂O(l)

The fluorosilicate ions generated at this time react with Mg²⁺ in the cement to produce a poorly soluble metallic compound of magnesium fluorosilicate.

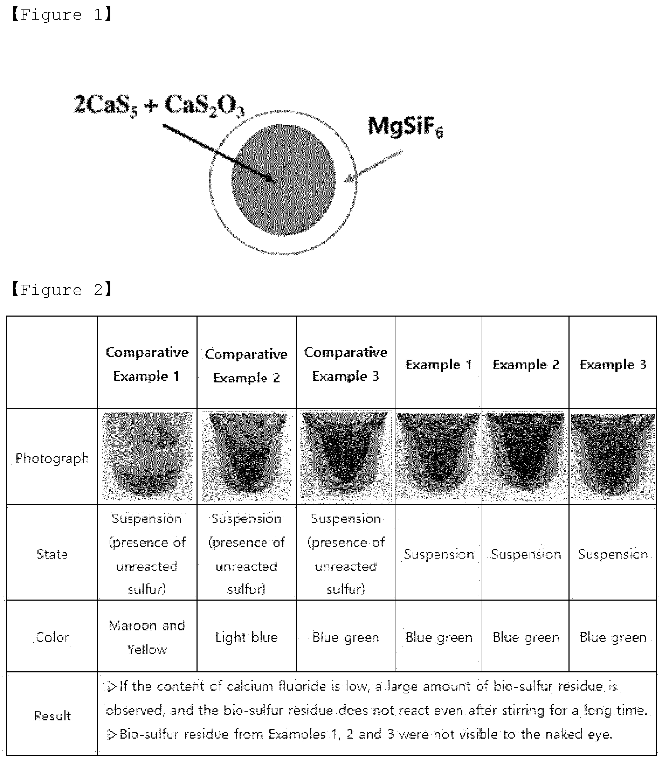

As schematically shown in FIG. 1, the poorly soluble metallic compound coats the surface of the unstable sulfur mixture and serves to stabilize it in the atmosphere.

Also, in an alkaline state, the poorly soluble metal fluoride exists as fine particles less than 1 micrometer, fills the joints of concrete, and thus improves watertightness and provides resistance to shrinkage before and after curing.

In the present invention, the anionic surfactant is used to promote the production of fluorosilicate compounds.

The anionic surfactant is contained in an amount of 0.5 to 3 parts by weight, based on 100 parts by weight of the bio-sulfur comprised in the bio-sulfur composition. If the anionic surfactant is used in an amount of less than 0.5 parts by weight, the production of fluorosilicate compounds by fluoride is weakened, thereby making it difficult to sufficiently serve as a catalyst. If the anionic surfactant is used in excess of 3 parts by weight, as the amount of surfactant used is increased, the physical properties of concrete may be deteriorated when modified bio-sulfur composition is used in concrete. It is preferable that the anionic surfactant is used in an amount of 1.0 to 2.0 parts by weight.

The anionic surfactant may be one or more selected from the group consisting of alkyl sulfate and polyoxyethylene alkyl ether sulfate.

The alkyl sulfate (AS) can be prepared by sulfating a higher alcohol with 12-18 carbon atoms with anhydrous sulfuric acid and then neutralizing it with a base. The counter ions of the alkyl sulfate may be, for example, ions of an alkali metals such as sodium and potassium; ammonium ion; complex ions of alkanolamines such as monoethanolamine, diethanolamine, and triethanolamine, or the like.

The type of alkyl sulfate is not particularly limited, and for example, may be sodium lauryl sulfate, potassium lauryl sulfate, sodium myristyl sulfate, potassium myristyl sulfate, sodium cetyl sulfate, sodium stearyl sulfate, sodium lauryl sulfate or the like. These may be used individually, or two or more types may be used together.

In the polyoxyethylene alkyl ether sulfate, the carbon number of the alkyl group may be 10 to 14, and the average added mole number of ethylene oxide may be 1 to 5.

The counter ions of polyoxyethylene alkyl ether sulfate may be, for example, ions of an alkali metals such as sodium and potassium; ammonium ion; complex ions of alkanolamines such as monoethanolamine, diethanolamine, and triethanolamine, or the like.

The type of polyoxyethylene alkyl ether sulfate is not particularly limited, and for example, may be sodium polyoxyethylene lauryl ether sulfate, sodium polyoxyethylene lauryl ether sulfate (another name: sodium laureth sulfate, prepared by BASF Japan), sodium polyoxyethylene lauryl ether sulfate (another name: sodium laureth sulfate, prepared by Lion Corporation), sodium polyoxyethylene lauryl ether sulfate, sodium polyoxyethylene lauryl ether sulfate or the like. These may be used individually, or two or more types may be used together.

In addition, the present invention relates to a method for preparing a modified bio-sulfur composition using calcium ions and fluorine ions, characterized by comprising the steps of:
1) dissolving bio-sulfur at 100 to 120°C;
2) adding and mixing 0.5 to 3 parts by weight of an anionic surfactant relative to 100 parts by weight of the bio-sulfur;
3) adding and mixing a calcium ion source containing 20 to 50 parts by weight of calcium element based on 100 parts by weight of the bio-sulfur and a fluorine ion source containing 20 to 50 parts by weight of fluorine element based on 100 parts by weight of the bio-sulfur, while maintaining the mixture in step 2) above at a temperature of 100 to 120°C; and
4) heating and mixing the mixture of step 3) above while stirring it.

All of the contents regarding the bio-sulfur composition described above can be applied to the above preparation method. Therefore, redundant contents will be omitted below.

In the preparation method of the present invention, since the bio-sulfur must be completely dissolved, it is important to completely dissolve it for at least 1 hour in step 1). The anionic surfactant from step 2) is added to the completely dissolved bio-sulfur. After confirming complete dissolution of the bio-sulfur and even mixing with the surfactant, the calcium ion source and fluorine ion source are added while maintaining the temperature at 100 to 120°C in step 3).

The rotation speed in step 4) is preferably 300 rpm or more. Also, the heating and mixing is preferably performed for 6 to 10 hours. Also, at this time, the heating temperature may be performed at 100 to 120°C.

In step 4) above, if the stirring speed is less than 300 rpm, since the reactivity of the surfactant, which is a catalyst, becomes weak, the rotation speed should be 300rpm or more. Also, for complete reaction of dissolved bio-sulfur and calcium ion, it is necessary to stir for 6 to 10 hours. If the stirring time is less than 6 hours, since the reaction between dissolved bio-sulfur and calcium ion is not complete, precipitates of unreacted bio-sulfur or calcium fluoride may occur. Also, it is economically undesirable to stir exceeding 10 hours. Preferably it is stirred for 7 to 9 hours.

Hereafter, the present invention will be described in detail through the Examples. However, the following Examples are intended to illustrate the present invention in more detail, and the scope of the present invention is not limited by the following Examples. The following Examples can be appropriately modified and changed by those skilled in the art within the scope of the present invention.

### Examples 1 to 5: Preparation of modified bio-sulfur composition

Modified bio-sulfur compositions were prepared according to the method below using the ingredients in Table 1 below in the corresponding ratios.
1) Step of completely dissolving bio-sulfur at 100 to 120°C;
2) Step of adding surfactant to the bio-sulfur and mixing it;
3) Step of adding and mixing calcium fluoride, while maintaining the mixture in step 2) above at a temperature of 100 to 120°C; and
4) Step of heating and mixing the mixture in step 3) above for 6 to 10 hours, while stirring it at a rotation speed of 300 rpm or more.

**[Table 1]**

| | Bio-sulfur | Calcium ion source and fluorine ion source (calcium fluoride) | Anionic surfactant |
|---|---|---|---|
| Comparative Example 1 | 100 | 10 | 1.5 |
| Comparative Example 2 | 100 | 20 | 1.5 |
| Comparative Example 3 | 100 | 30 | 1.5 |
| Example 1 | 100 | 55 | 1.5 |
| Example 2 | 100 | 60 | 1.5 |
| Example 3 | 100 | 70 | 1.5 |

| | | | |
|---|---|---|---|
| (unit: parts by weight) | | | |

### Experiment Example 1: Evaluation of physical properties of modified bio-sulfur composition

### 1) Measurement of dissolution state of bio-sulfur

After completion of the reaction, the state of the dissolved bio-sulfur composition was visually confirmed after being left at room temperature (20 ± 3°C) for 7 days, and the results are shown in FIG. 2.

As can be identified in FIG. 2, it can be seen that in the case of the modified bio-sulfur composition using calcium ions and fluorine ions in Examples 4 to 6 of the present invention, as all of them existed as a suspension, the modification of bio-sulfur was completed completely.

On the other hand, it was confirmed that in the case of Comparative Examples 1 to 3, unreacted sulfur exists, and this unreacted sulfur remained as it is even after additional stirring.

## Claims

1. A modified bio-sulfur composition using calcium ions and fluorine ions, comprising:
a bio-sulfur;
a calcium ion source containing 20 to 50 parts by weight of calcium element based on 100 parts by weight of the bio-sulfur;
a fluorine ion source containing 20 to 50 parts by weight of fluorine element based on 100 parts by weight of the bio-sulfur; and
0.5 to 3 parts by weight of an anionic surfactant based on 100 parts by weight of the bio-sulfur.

2. The modified bio-sulfur composition using calcium ions and fluorine ions according to claim 1, wherein the bio-sulfur contains sulfur in an amount of 40% by weight or more.

3. The modified bio-sulfur composition using calcium ions and fluorine ions according to claim 1, wherein the calcium ion source is selected from calcium, a calcium compound, or a material containing a calcium compound, and the fluorine ion source is selected from fluorine, a fluorine compound, or a material containing a fluorine compound.

4. The modified bio-sulfur composition using calcium ions and fluorine ions according to claim 1, wherein the calcium ion source and fluorine ion source are at least one types selected from calcium fluoride, calcium fluorosilicate, and fluorspar.

5. The modified bio-sulfur composition using calcium ions and fluorine ions according to claim 1, wherein the anionic surfactant is at least one selected from the group consisting of alkyl sulfate and polyoxyethylene alkyl ether sulfate.

6. A method for preparing a modified bio-sulfur composition using calcium ions and fluorine ions, comprising the steps of:
1) dissolving bio-sulfur at 100 to 120°C;
2) adding and mixing 0.5 to 3 parts by weight of an anionic surfactant relative to 100 parts by weight of the bio-sulfur;
3) adding and mixing a calcium ion source containing 20 to 50 parts by weight of calcium element based on 100 parts by weight of the bio-sulfur and a fluorine ion source containing 20 to 50 parts by weight of fluorine element based on 100 parts by weight of the bio-sulfur, while maintaining the mixture in step 2) above at a temperature of 100 to 120°C; and
4) heating and mixing the mixture of step 3) above while stirring it.

7. The method for preparing a modified bio-sulfur composition using calcium ions and fluorine ions according to claim 6, wherein in step 4) above, the stirring speed is 300 rpm or more.

8. The method for preparing a modified bio-sulfur composition using calcium ions and fluorine ions according to claim 6, wherein in step 4) above, the heating and mixing time is 6 to 10 hours.

9. The method for preparing a modified bio-sulfur composition using calcium ions and fluorine ions according to claim 6, wherein in step 4) above, the heating and mixing are performed at a temperature of 100 to 120°C.
